# EUROPEAN PATENT APPLICATION

(11) **EP 4 811 453 A1**
(43) Date of publication of application: **23.09.2026**
(21) Application number: 24893248.5
(22) Date of filing: 07.11.2024
(51) Int. Cl.: H01M 4/525, H01M 4/36, H01M 10/052

(54) **POSITIVE ELECTRODE ACTIVE MATERIAL AND PREPARATION METHOD THEREFOR, POSITIVE ELECTRODE PLATE, BATTERY CELL, BATTERY, AND ELECTRICAL APPARATUS**

(30) Priority: 22.11.2023 CN 202311571714
(71) Applicant: Contemporary Amperex Technology Co., Limited, Ningde, Fujian 352100 (CN)
(72) Inventor: JIAO, Wen, Ningde, Fujian 352100 (CN); ZHANG, Qiyu, Ningde, Fujian 352100 (CN); WU, Qi, Ningde, Fujian 352100 (CN); CHEN, Qiang, Ningde, Fujian 352100 (CN); WANG, Jing, Ningde, Fujian 352100 (CN); FAN, Jingpeng, Ningde, Fujian 352100 (CN)
(74) Representative: Gong, Jinping
(86) International application number: PCT/CN2024/130364
(87) International publication number: WO 2025/108090

(57) **Abstract**

A positive electrode active material and a preparation method therefor, a positive electrode plate, a battery cell, a battery, and an electric apparatus are provided, pertaining to the field of battery technology. The positive electrode active material includes: a positive electrode base material, and a first coating layer and a second coating layer sequentially coating a surface of primary particles of the positive electrode base material; where a concentration of lithium element in the first coating layer is lower than a concentration of lithium element in the positive electrode base material, and the second coating layer includes an ion conductor material. The technical solution of this application can improve cycling performance of a battery cell.

## Description

### CROSS-REFERENCE TO RELATED APPLICATIONS

This patent document claims priority to and benefit of Chinese Patent Application No. 202311571714.3, filed on November 22, 2023 and entitled "POSITIVE ELECTRODE ACTIVE MATERIAL AND PREPARATION METHOD THEREFOR, POSITIVE ELECTRODE PLATE, BATTERY CELL, BATTERY, AND ELECTRIC APPARATUS", which is incorporated herein by reference in its entirety as part of the disclosure of this patent document.

### TECHNICAL FIELD

This application relates to the field of battery technology, and in particular, to a positive electrode active material and a preparation method therefor, a positive electrode plate, a battery cell, a battery, and an electric apparatus.

### BACKGROUND

With the increasing severity of environmental pollution, the new energy industry has garnered growing attention. In the new energy industry, battery technology is a critical factor influencing its development.

The development of battery technology requires consideration of multiple design factors, such as energy density, cycle life, and reliability. The design of the positive electrode active material in a battery cell is crucial to the performance of the battery cell. Therefore, providing a positive electrode active material to enhance the cycling performance of the battery cell is an urgent technical challenge to be addressed.

### SUMMARY

This application is made in view of the above issues, with the objective of providing a positive electrode active material to improve the cycling performance of a battery cell.

To achieve the above objective, this application provides a positive electrode active material and a preparation method therefor, a positive electrode plate, a battery cell, a battery, and an electric apparatus.

According to a first aspect, a positive electrode active material is provided, including: a positive electrode base material, and a first coating layer and a second coating layer sequentially coating a surface of primary particles of the positive electrode base material; where a concentration of lithium element in the first coating layer is lower than a concentration of lithium element in the positive electrode base material, and the second coating layer includes an ion conductor material.

An embodiment of this application provides a positive electrode active material, where a surface of primary particles of the positive electrode base material is coated with a first coating layer, a concentration of lithium element in the first coating layer is lower than a concentration of lithium element in the positive electrode base material, such that a lithium concentration gradient exists between the positive electrode base material and the first coating layer, facilitating deintercalation of lithium ions in the positive electrode base material from the positive electrode base material, thereby contributing to an increase in the content of active lithium ions in a battery cell. The first coating layer and the second coating layer sequentially coat the surface of the primary particles of the positive electrode base material, that is, an outer surface of the first coating layer is coated with the second coating layer, and the second coating layer includes an ion conductor material. The ion conductor material has favorable ion transport properties, resulting in a high ionic conductivity of the positive electrode active material and a low impedance of the battery cell. Providing the second coating layer also contributes to suppressing side reactions between the positive electrode base material and an electrolyte solution, reducing impedance at a solid-liquid interface of the positive electrode, thereby facilitating improvement of the cycling performance of the battery cell. Therefore, the positive electrode active material in this embodiment of this application exhibits favorable performance, capable of enhancing the cycling performance of the battery cell.

In a possible implementation, a chemical formula of the positive electrode base material is Li₁₊ₐ[NiₓCo_{y}Mn,M_{b}]O₂, where M includes at least one of Zr, Al, Ti, Sb, Nb, Te, Mg, Al, Ca, V, Ta, or Sr, 0.6 ≤ x < 1, 0 ≤ y ≤ 0.4, 0 ≤ z ≤ 0.4, 0 ≤ a ≤ 0.2, 0 ≤ b ≤ 0.1, and x + y + z + b = 1.

A battery cell prepared with the positive electrode base material of the above chemical formula has a high energy density. In a case where the positive electrode base material satisfies the above chemical formula, the first coating layer facilitates deintercalation of lithium ions from the positive electrode base material, and the second coating layer contributes to suppressing dissolution of transition metal ions in the positive electrode base material, thereby resulting in better performance of a positive electrode active material and a battery cell prepared with the positive electrode active material.

In a possible implementation, 0.8 ≤ x < 1. In this way, a content of nickel element in the positive electrode base material is high, enabling the positive electrode active material to have both favorable stability and a higher specific capacity.

In a possible implementation, M includes at least one of Ti, Nb, Te, V, or Ta. Doping M element in the positive electrode base material improves crystal structure stability of the positive electrode base material and reversibility of a layered structure of the positive electrode base material during lithium deintercalation, thereby improving electrochemical performance of the positive electrode active material. In addition, M element can form high-valence ions. According to defect chemistry theory, doping of high-valence ions generates lithium vacancies inside a material, thereby facilitating lithium ion transport inside the positive electrode base material.

In a possible implementation, the ion conductor material includes a compound formed by Li element and at least one of W, Mo, or P element; and optionally, the ion conductor material includes at least one of Li₂WO₄, Li₂MoO₄, or Li₃PO₄.

Due to preparation and other reasons, residual lithium such as lithium carbonate exists on a surface of the positive electrode base material. W, Mo or P element can react with the residual lithium, thereby generating a compound formed by Li element and at least one of W, Mo or P element. Inclusion of the above compound in the ion conductor material facilitates reduction of impedance at a positive electrode interface, reducing the internal resistance of the battery cell. Further, the setting of the above compound facilitates lithium ion transport, facilitating improvement of rate performance of the battery cell.

In a possible implementation, a material of the first coating layer includes a transition metal oxide, where a transition metal in the transition metal oxide is the same as a transition metal in the positive electrode base material. In other words, the first coating layer may be formed through certain treatment of the positive electrode base material, and a quantity of lithium vacancies in the first coating layer is more than a quantity of lithium vacancies in the positive electrode base material, thereby facilitating deintercalation of lithium ions in the positive electrode base material.

In a possible implementation, a thickness d1 of the first coating layer satisfies: 1 nm ≤ d1 ≤ 5 nm; and optionally, 1 nm < dl ≤ 2 nm. In this way, a length of lithium ion transport path is appropriate, and an appropriate lithium concentration gradient exists between the first coating layer and the positive electrode base material, thereby facilitating improvement of a capacity of the battery cell.

In a possible implementation, a thickness d2 of the second coating layer satisfies: d2 ≤ 20 nm; and optionally, 4 nm ≤ d2 ≤ 10 nm. In this way, the length of lithium ion transport path is appropriate, facilitating improvement of the capacity of the battery cell.

In a possible implementation, a ratio B of a mass of the second coating layer to a mass of the positive electrode base material satisfies: 1000 ppm < B ≤ 3000 ppm; and optionally, 1000 ppm < B ≤ 2000 ppm. In this way, the second coating layer has an appropriate mass proportion, so that the second coating layer has an appropriate thickness.

In a possible implementation, a particle size distribution by volume of the positive electrode active material satisfies: (Dᵥ90 - Dᵥ10)/Dᵥ501 ≥ 1.2; and optionally, (Dᵥ90 - Dᵥ10)/Dᵥ501 ≥ 1.3. In this way, the positive electrode active material includes both an appropriate content of larger particles and an appropriate content of smaller particles. The positive electrode active material has a wider distribution of particle sizes, facilitating improvement of a powder compacted density of the positive electrode active material, thereby facilitating improvement of a volumetric energy density of the battery cell.

In a possible implementation, a particle size distribution by volume Dᵥ501 of the positive electrode active material satisfies: 7 µm ≤ Dᵥ501 ≤ 12 µm; optionally, 8 µm ≤ Dᵥ501 ≤ 10 µm. In this way, a length of a path for lithium ion deintercalation from the positive electrode active material is appropriate, and the battery cell has a high capacity and good cycling performance.

In a possible implementation, the first coating layer includes a material having a spinel structure. The positive electrode base material may react with the ammonium salt, a product of the ammonium salt decomposed upon heating may react with an oxide of lithium (for example, Li₂O) in the positive electrode base material and residual lithium on the surface, thereby generating lithium vacancies on the surface of the positive electrode base material, and the surface of the positive electrode base material transitions from a layered structure to a spinel structure, thereby generating the first coating layer including the material having the spinel structure.

In a possible implementation, the positive electrode active material is a material obtained through reactions between the secondary particles of the positive electrode base material and the ammonium salt. During the reactions, the ammonium salt and its decomposition product may infiltrate grain boundaries of the positive electrode base material, thereby forming the first coating layer and the second coating layer on the surface of the primary particles of the positive electrode base material.

According to a second aspect, a preparation method for the positive electrode active material according to the first aspect and any possible implementation thereof is provided, including: preparing a positive electrode base material; and preparing a first coating layer and a second coating layer on a surface of primary particles of the positive electrode base material to obtain the positive electrode active material.

In a possible implementation, the preparing a first coating layer and a second coating layer on a surface of primary particles of the positive electrode base material to obtain the positive electrode active material includes: mixing and sintering the positive electrode base material and an ammonium salt in an inert atmosphere to obtain the positive electrode active material.

The positive electrode base material may react with the ammonium salt to form the first coating layer on the surface of the positive electrode base material, and the compound produced by decomposition of the ammonium salt may react with residual lithium on the surface of the positive electrode base material, consuming residual lithium while forming the second coating layer; additionally, sintering in the inert atmosphere facilitates the formation and preparation of the first coating layer. Therefore, through the reactions of the positive electrode base material with the ammonium salt, the positive electrode active material in this embodiment of this application can be prepared.

In a possible implementation, the mixing and sintering the positive electrode base material and an ammonium salt in an inert atmosphere to obtain the positive electrode active material includes: mixing the positive electrode base material and the ammonium salt in a high-energy ball mill; and sintering the mixed positive electrode base material and ammonium salt in the inert atmosphere to obtain the positive electrode active material.

During ball milling in the high-temperature ball mill and sintering, the ammonium salt may melt and infiltrate grain boundaries of the positive electrode base material, allowing the ammonium salt to fully contact the surface of the primary particles of the positive electrode base material; the ball milling process facilitates mixing of the ammonium salt with the positive electrode base material, enabling uniform distribution of the ammonium salt on the surface and at grain boundaries of the primary particles of the positive electrode base material. During sintering, ammonia gas produced by decomposition of the ammonium salt reacts with the positive electrode base material to form a material with a spinel structure having lithium vacancies, thereby forming the first coating layer; additionally, a compound of the decomposed ammonium salt may react with the residual lithium on the surface of the positive electrode base material, generating the second coating layer while consuming the residual lithium.

In a possible implementation, a rotational speed V of the high-energy ball mill satisfies: 500 rpm ≤ V ≤ 1400 rpm; and optionally, 800 rpm ≤ V ≤ 1200 rpm.

In a possible implementation, a ball milling time t1 satisfies: 0.5 h ≤ t1 ≤ 3 h; and optionally, 1 h ≤ t1 ≤ 2 h.

At the above rotational speed and/or ball milling time, energy generated by high-energy ball milling promotes interaction between the ammonium salt and the positive electrode base material, allowing the ammonium salt to enter grain boundary gaps of the positive electrode base material, thereby facilitating the reactions between the ammonium salt and the positive electrode base material.

In a possible implementation, a sintering temperature T1 satisfies: 400°C ≤ T1 ≤ 600°C; and optionally, 400°C ≤ T1 ≤ 500°C.

In a possible implementation, a sintering time t2 satisfies: 4 h ≤ t2 ≤ 8 h; and optionally, 5 h ≤ t2 ≤ 6 h.

The above sintering temperature and sintering time facilitate decomposition of the ammonium salt and reactions of the decomposition product of the ammonium salt with the positive electrode base material and residual lithium, facilitating preparation of the first coating layer and the second coating layer.

In a possible implementation, the ammonium salt includes at least one of W, Mo, or P element; optionally, the ammonium salt includes at least one of ammonium molybdate, ammonium paramolybdate, ammonium metatungstate, ammonium phosphate, ammonium hydrogen phosphate, or ammonium dihydrogen phosphate. W, Mo, or P element may react with lithium in residual lithium to form a corresponding lithium-containing compound, thereby forming the second coating layer. The above ammonium salt includes W, Mo, or P element and have an appropriate melting point, facilitating decomposition during sintering.

In a possible implementation, the preparing a positive electrode base material includes: preparing a precursor of the positive electrode base material; and mixing and sintering the precursor, a lithium salt, and a compound containing M element to prepare the positive electrode base material, where M element includes at least one of Zr, Al, Ti, Sb, Nb, Te, Mg, Al, Ca, V, Ta, or Sr.

The positive electrode base material containing M element can be obtained through mixing and sintering the precursor, the lithium salt and the compound containing M element, and therefore the positive electrode base material has high crystal structure stability.

In a possible implementation, a molar ratio C of the lithium salt to the metal element in the precursor satisfies: 0.95 ≤ C ≤ 1.15; and/or a sintering temperature T2 satisfies: 650°C ≤ T2 ≤ 950°C; and/or a sintering time t3 satisfies: 10 h ≤ t2 ≤ 20 h.

In a possible implementation, based on a total mass of the precursor, the lithium salt, and the compound containing M element, a mass content D of the compound containing M element satisfies: 200 ppm ≤ D ≤ 5000 ppm.

Reasonably setting the temperature and time of sintering the precursor, the lithium salt, and the compound containing M element, and the mass content of the compound containing M element helps to obtain the positive electrode base material uniformly doped with M element.

In a possible implementation, a particle size distribution by volume Dᵥ502 of the precursor satisfies: 7 µm ≤ Dᵥ502 ≤ 12 µm; optionally, 8 µm ≤ Dᵥ502 ≤ 10 µm. In this way, a positive electrode active material with an appropriate particle size distribution by volume can be obtained.

According to a third aspect, a positive electrode plate is provided, including the positive electrode active material according to the first aspect and any possible implementation thereof, and/or the positive electrode active material prepared by using the method according to the second aspect and any possible implementation thereof.

According to a fourth aspect, a battery cell is provided, including the positive electrode plate according to the third aspect.

According to a fifth aspect, a battery is provided, including the battery cell according to the fourth aspect.

According to a sixth aspect, an electric apparatus is provided, including the battery according to the fifth aspect.

### BRIEF DESCRIPTION OF DRAWINGS

To more clearly illustrate the technical solutions of the embodiments of this application, the drawings for the embodiments of this application are briefly introduced below. Obviously, the drawings described below are merely some embodiments of this application, and those of ordinary skill in the art can obtain other drawings based on these drawings without creative effort.
FIG. 1 is a schematic diagram of a positive electrode active material according to an embodiment of this application;
FIG. 2 is an SEM image of a positive electrode active material according to an embodiment of this application;
FIG. 3 is an ion-milled cross-sectional view of a positive electrode active material according to an embodiment of this application;
FIG. 4 is a schematic diagram of a preparation method for a positive electrode active material according to an embodiment of this application;
FIG. 5 is a schematic diagram of a battery cell according to an embodiment of this application;
FIG. 6 is a schematic diagram of a battery according to an embodiment of this application; and
FIG. 7 is a schematic diagram of an electric apparatus according to an embodiment of this application.

### DESCRIPTION OF EMBODIMENTS

The embodiments of a positive electrode active material and preparation method therefor, positive electrode plate, battery cell, battery, and electric apparatus of this application are described in detail below with appropriate reference to the drawings. However, unnecessary detailed descriptions may be omitted. For example, detailed descriptions of well-known matters or redundant descriptions of substantially identical structures may be omitted. This is to avoid unnecessary verbosity in the following description, facilitating understanding by those skilled in the art. Additionally, the drawings and the following description are provided to enable those skilled in the art to fully understand this application and are not intended to limit the subject matter recited in the claims.

A "range" disclosed in this application is defined in the form of lower and upper limits, where a given range is defined by selecting a lower limit and an upper limit, and the selected lower and upper limits define the boundaries of a specific range. Ranges defined in this manner may include or exclude endpoints and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, a numerical range "a-b" represents an abbreviated representation of any combination of real numbers between a and b, where both a and b are real numbers. For example, the numerical range "0-5" indicates that all real numbers between "0-5" are fully listed herein, and "0-5" is merely an abbreviated representation of these numerical combinations. Additionally, when a parameter is expressed as an integer greater than or equal to 2, it is equivalent to disclosing that the parameter is, for example, an integer 2, 3, 4, 5, 6, 7, 8, 9, 10, 11, 12, and the like.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the method may further include step (c), and this indicates that step (c) may be added to the method in any position, for example, the method may include steps (a), (b), and (c), or steps (a), (c), and (b), or steps (c), (a), and (b), and the like.

Typically, a battery cell includes a positive electrode plate, a negative electrode plate, an electrolyte, and a separation member. During charge and discharge of the battery cell, active ions intercalate and deintercalate back and forth between the positive electrode plate and the negative electrode plate. The electrolyte serves to conduct ions between the positive electrode plate and the negative electrode plate. The separation member is disposed between the positive electrode plate and the negative electrode plate, primarily to prevent short-circuiting between the positive electrode and negative electrode while allowing active ions to pass through. In some embodiments, the aforementioned battery cell is also referred to as a secondary battery, and the battery cell may be the smallest battery unit.

During charge of a lithium-ion battery, lithium ions deintercalate from a positive electrode active material, move, and intercalate into a negative electrode material; during discharge, lithium ions deintercalate from the negative electrode material, move, and intercalate into the positive electrode active material.

It should be understood that the "intercalation" process described in this application refers to the process in which lithium ions are inserted into the positive electrode active material and the negative electrode material due to electrochemical reactions, and the "deintercalation" process described in this application refers to the process in which lithium ions are extracted from the positive electrode active material and the negative electrode material due to electrochemical reactions.

The development of battery technology requires simultaneous consideration of multiple design factors, such as energy density, cycle life, discharge capacity, charge-discharge rate, and reliability. A battery cell includes a positive electrode plate, and the performance of a positive electrode active material in the positive electrode plate is critical to the capacity, cycling performance, and charge-discharge rate performance of the battery cell. To improve the performance of the positive electrode active material, a coating layer is typically provided on a surface of a positive electrode base material to enhance corresponding performance of the battery cell. However, the arrangement of the coating layer and selection of a type of the coating layer for improving the performance of the battery cell are urgent technical challenges to be addressed.

In view of this, an embodiment of this application provides a positive electrode active material, including a positive electrode base material, and a first coating layer and a second coating layer sequentially coating a surface of primary particles of the positive electrode base material, where a concentration of lithium element in the first coating layer is lower than a concentration of lithium element in the positive electrode base material, and the second coating layer includes an ion conductor material, thereby contributing to improving the cycling performance of the battery cell.

### [Positive electrode active material]

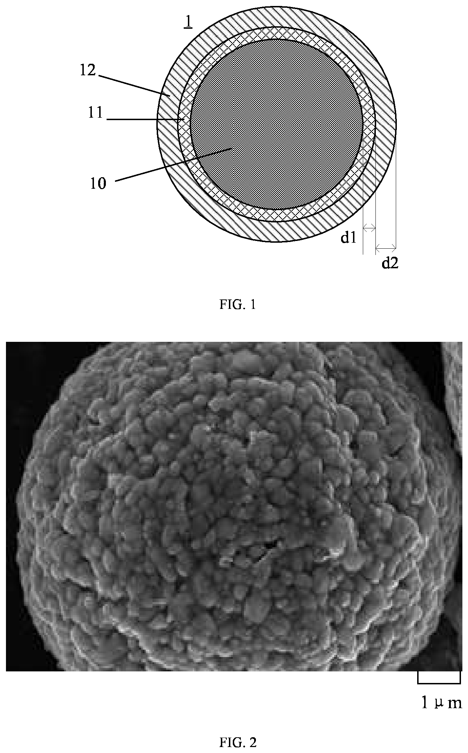

FIG. 1 is a schematic diagram of a positive electrode active material according to an embodiment of this application. An embodiment of this application provides a positive electrode active material 1. As shown in FIG. 1, the positive electrode active material 1 includes a positive electrode base material 10, a first coating layer 11 and a second coating layer 12 sequentially coating a surface of primary particle of the positive electrode base material 10.

The positive electrode base material 10 may be a transition metal oxide with a layered structure, such as a ternary material or a lithium-rich manganese-based material. During charge and discharge of a battery cell, active lithium ions in the positive electrode base material 10 can deintercalate from and intercalate into the positive electrode base material 10, that is, the positive electrode base material 10 may be a material providing active lithium ions.

In FIG. 1, the positive electrode base material represents a positive electrode base material of primary particles.

Primary particles are non-agglomerated particles, and secondary particles are particles formed by agglomeration of primary particles. That is, a primary particle is a single non-agglomerated particle. The positive electrode active material is prepared from a precursor of the positive electrode base material. For example, for a ternary material, during the preparation of the precursor, Ni, Co, and Mn metal ions form primary particles through specific reactions, and these primary particles aggregate or agglomerate to form an approximately spherical precursor, where the precursor is the agglomerated secondary particles.

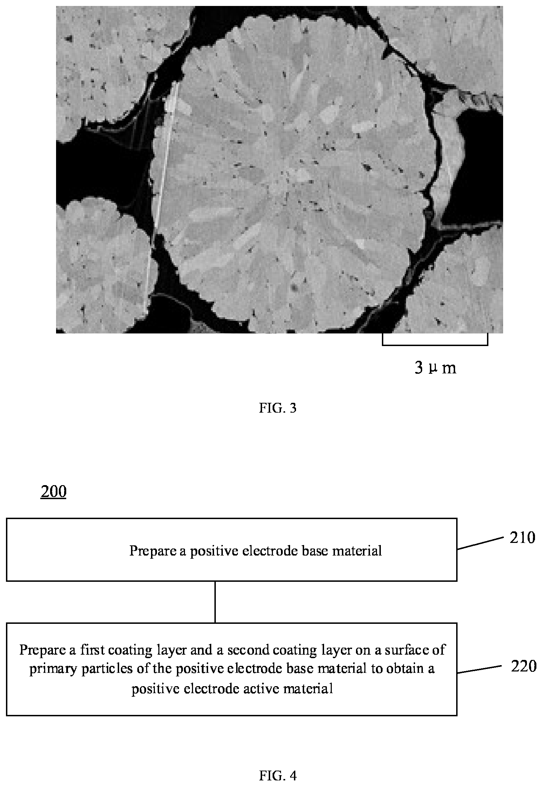

FIG. 2 is an SEM image of a positive electrode active material according to an embodiment of this application, and FIG. 3 is an ion-milled cross-sectional view of a positive electrode active material according to an embodiment of this application. As shown in FIG. 2 and FIG. 3, in the SEM image, large spherical particles are secondary particles, and the secondary particles include multiple primary particles; in the ion-milled cross-sectional view, it can be seen that the secondary particles include multiple primary particles; with reference to the schematic of FIG. 1, in the positive electrode active material in the embodiment of this application, the surface of the primary particle is provided with a first coating layer 11 and a second coating layer 12.

The first coating layer 11 and the second coating layer 12 sequentially coat the surface of the primary particle of the positive electrode base material 10. In other words, in the primary particle of the positive electrode active material 1, from the outside to the inside, the second coating layer 12, the first coating layer 11, and the positive electrode base material 10 are arranged sequentially.

In a case that a coating layer is provided on a surface of secondary particle of the positive electrode base material 10, the secondary particle of the positive electrode active material 1 includes a secondary particle (formed by agglomeration of multiple primary particles of the positive electrode base material) and a coating layer covering the entire secondary particle. In this case, after the secondary particle cracks, at least a portion of a surface of the positive electrode base material is not provided with a coating layer, and the surface of the positive electrode base material comes into contact with an electrolyte solution in the battery cell, making side reactions more likely to occur at the positive electrode interface, which is not conducive to improving the performance of the battery cell. Compared with providing a coating layer on the surface of secondary particle of the positive electrode base material 10, in the embodiment of this application, the surface of the primary particle of the positive electrode active material 1 is provided with the first coating layer 11 and the second coating layer 12, such that even if the secondary particles crack, the positive electrode base material 10 does not come into contact with the electrolyte solution or the risk of coming into contact with the electrolyte solution is greatly reduced, thereby suppressing side reactions at the positive electrode interface, contributing to reducing the impedance of the battery cell, and facilitating improvements in the cycling performance of the battery cell.

A concentration of lithium element in the first coating layer is lower than a concentration of lithium element in the positive electrode base material. In this way, a lithium concentration gradient exists between the positive electrode base material 10 and the first coating layer 11, facilitating deintercalation of lithium ions in the positive electrode base material 10 from the positive electrode base material 10, thereby contributing to increasing a content of active lithium ions in the battery cell, and further enhancing a capacity of the battery cell.

The second coating layer 12 includes an ion conductor material.

An ion conductor refers to an ion conductor in which current is carried by movable ions, which is distinct from a conductor and semiconductor. The charge carriers are neither electrons nor holes but movable ions. The ion conductor material in the embodiment of this application may refer to a fast ion conductor material, meaning a material with a high ion migration rate, capable of rapidly transporting ions.

The ion conductor material may be a compound formed by lithium and an oxide of one or more elements among Al, Zr, W, Zn, Mg, Ti, La, Nb, Sb, V, Y, Ce, Bi, P, B, Si, N, S, or a mixture of such oxides and compounds, for example, Li₃PO₄.

The ion conductor material has favorable ion transport properties, contributing to increasing a lithium ion transport rate and improving the rate performance of the battery cell. Additionally, the second coating layer 12 can reduce the risk of direct contact between the positive electrode base material 10 and the electrolyte solution, contributing to suppressing side reactions between the positive electrode base material 10 and the electrolyte, reducing impedance at a solid-liquid interface of the positive electrode, thereby facilitating improvement of the cycling performance of the battery cell.

An embodiment of this application provides a positive electrode active material 1, where a surface of a primary particle of a positive electrode base material 10 is coated with a first coating layer 11, and a concentration of lithium element in the first coating layer 11 is lower than a concentration of lithium element in the positive electrode base material 10, such that a lithium concentration gradient exists between the positive electrode base material 10 and the first coating layer 11, facilitating deintercalation of lithium ions in the positive electrode base material 10 from the positive electrode base material 10, thereby contributing to increasing a content of active lithium ions in a battery cell, and further increasing a capacity of the battery cell. The first coating layer 11 and the second coating layer 12 sequentially coat the surface of the primary particle of the positive electrode base material 10, that is, an outer surface of the first coating layer 11 is coated with the second coating layer 12, and the second coating layer 12 includes an ion conductor material. The ion conductor material has favorable ion transport properties, contributing to increasing the lithium ion transport rate and improving the rate performance of the battery cell. The second coating layer 12 also contributes to suppressing side reactions between the positive electrode base material 10 and an electrolyte solution, reducing impedance at a solid-liquid interface of the positive electrode, thereby facilitating improvement of cycling performance of the battery cell. Therefore, the positive electrode active material 1 in this embodiment of this application has favorable performance, capable of enhancing the performance of the battery cell.

In some embodiments, a chemical formula of the positive electrode base material 10 is Li₁₊ₐ[NiₓCo_{y}Mn_{z}M_{b}]O₂, where M includes at least one of Zr, Al, Ti, Sb, Nb, Te, Mg, Al, Ca, V, Ta, or Sr, 0.6 ≤ x < 1, 0 ≤ y ≤ 0.4, 0 ≤ z ≤ 0.4, 0 ≤ a ≤ 0.2, 0 ≤ b ≤ 0.1, and x + y + z + b = 1.

The value of x may be 0.6, 0.7, 0.8, 0.9, or any value within the above range, y may be 0.1, 0.2, 0.3, 0.4, or any value within the above range, z may be 0.1, 0.2, 0.3, 0.4, or any value within the above range, b may be 0, 0.1, or any value within the above range, and a may be 0, 0.1, 0.2, or any value within the above range.

In a case where x is greater than or equal to 0.6, a content of nickel in the positive electrode base material is higher, such high-nickel positive electrode base material has a structure that is less stable than a positive electrode base material with a lower nickel content (for example, a material where x is less than 0.6), and is more prone to side reactions. Providing the first coating layer 11 and the second coating layer 12 on primary particles of such high-nickel positive electrode base material improves performance of the positive electrode active material 1, enhancing cycling performance and rate performance of the battery cell while enabling the battery cell to have a high energy density.

Additionally, for the positive electrode base material where x is greater than or equal to 0.6, the prepared positive electrode base material mostly has a morphology of secondary particles, and during use of the battery cell, the secondary particles are prone to cracking, therefore, providing the first coating layer and the second coating layer on primary particles of the positive electrode base material where x is greater than or equal to 0.6 is more necessary.

M may be a doping element. In a case where b is 0, the positive electrode base material 10 may be a ternary material. For example, the positive electrode base material 10 is LiNi_{0.6}Co_{0.2}Mn_{0.2}O₂, LiNi_{0.8}Co_{0.1}Mn_{0.1}O₂, or the like. In a case where b is greater than 0, the positive electrode base material 10 may be LiNi_{0.6}Co_{0.2}Mn_{0.2}Al_{0.1}O₂.

In some embodiments, M element is uniformly or relatively uniformly doped in the positive electrode base material 10, in this way, performance of the positive electrode base material is more stable. Uniform doping of M element can be tested by EDS, for example, by observing whether contents of M element in different regions are substantially the same to determine whether M element is uniformly doped.

Optionally, F, S, P, N, B and other elements may also be doped in the positive electrode base material 10 having the above chemical formula, these elements may occupy the position of O.

It should be noted that during charge and discharge, the battery cell undergoes deintercalation and consumption of Li, a molar content of Li is different when the battery is discharged to a different state; and the above limitation on a includes the molar content of Li under different charge-discharge states of the battery (typically the battery voltage is between 2V to 5V). In the enumeration regarding the positive electrode base material in this application, a molar content of Li is an initial state of the material, that is, a state before feeding, and when the positive electrode base material is applied in a battery system, after charge-discharge cycles, the molar content of Li changes. In the enumeration regarding the positive electrode base material in this application, a molar content of O is only a theoretical state value, and since lattice oxygen release causes a change in the molar content of oxygen, an actual molar content of O fluctuates.

In this embodiment, a battery cell prepared with the positive electrode base material 10 of the above chemical formula has a high energy density. When the positive electrode base material 10 satisfies the above chemical formula, the first coating layer 11 facilitates deintercalation of lithium ions from the positive electrode base material 10; the second coating layer 12 facilitates suppressing dissolution of transition metal ions in the positive electrode base material 10 and side reactions between the positive electrode base material 10 and the electrolyte solution, thereby the positive electrode active material 1 has favorable crystal structure stability, retains high ionic activity, and has favorable storage performance. In this case, the battery cell has higher cycle stability and capacity.

In some embodiments, 0.8 ≤ x < 1. For example, x is 0.9175. In this way, a content of nickel element in the positive electrode base material 10 is higher, thereby the positive electrode active material 1 has a higher specific capacity while having favorable stability.

In some embodiments, 0 ≤ x < 0.6. For example, the positive electrode base material 10 is LiNi_{0.3}Co_{0.4}Mn_{0.3}O₂. That is, the positive electrode base material 10 may alternately be a material with a slightly lower nickel content.

In some embodiments, M includes at least one of Ti, Nb, Te, V, or Ta.

Doping M element in the positive electrode base material 10 improves crystal structure stability of the positive electrode base material 10 and reversibility of a layered structure of the positive electrode base material 10 during lithium deintercalation, thereby improving electrochemical performance of the positive electrode active material 1. In addition, M element can form high-valence ions. According to defect chemistry theory, doping of high-valence ions generates lithium vacancies inside a material, thereby facilitating lithium ion transport inside the positive electrode base material 10.

In some embodiments, the ion conductor material includes a compound formed by Li element and at least one of W, Mo or P element.

Due to preparation and other reasons, residual lithium (also called remnant lithium) exists on a surface of the positive electrode base material 10, for example, lithium carbonate and the like. W, Mo or P element can react with the residual lithium, thereby generating a compound formed by Li element and at least one of W, Mo or P element. In this way, residual lithium can be consumed, corresponding compounds can be generated, and generated compounds have favorable ion transport performance and conductivity, facilitating improvement of rate performance of the battery cell and reduction of internal resistance of the battery cell.

Optionally, the ion conductor material includes at least one of Li₂WO₄, Li₂MoO₄ or Li₃PO₄. Inclusion of the above compound in the ion conductor material facilitates reduction of impedance at a positive electrode interface, reducing the internal resistance of the battery cell. Further, the setting of the above compound facilitates lithium ion transport, facilitating improvement of rate performance of the battery cell.

In some embodiments, a material of the first coating layer 11 includes a transition metal oxide, where a transition metal in the transition metal oxide is the same as a transition metal in the positive electrode base material 10. In other words, the first coating layer 11 may be formed through certain treatment of the positive electrode base material 10, and a quantity of lithium vacancies in the first coating layer 11 is more than a quantity of lithium vacancies in the positive electrode base material 10, thereby facilitating deintercalation of lithium ions in the positive electrode base material 10.

In some embodiments, a thickness d1 of the first coating layer 11 satisfies: 1 nm ≤ d1 ≤ 5 nm.

The thickness d1 may be 1 nm, 2 nm, 3 nm, 5 nm or any value within the above range.

In a case where d1 is not less than 1 nm, an appropriate lithium concentration gradient exists between the first coating layer 11 and the positive electrode base material 10, facilitating deintercalation of lithium ions from the positive electrode base material 10. In the case where d1 does not exceed 5 nm, a length of lithium ion transport path is appropriate.

In this way, with 1 nm ≤ d1 ≤ 5 nm, the length of lithium ion transport path is appropriate, and an appropriate lithium concentration gradient exists between the first coating layer 11 and the positive electrode base material 10, thereby facilitating improvement of a capacity of the battery cell.

Optionally, 1 nm ≤ d1 ≤ 2 nm. In this way, the battery cell has a high rate performance.

In some embodiments, a thickness d2 of the second coating layer 12 satisfies: d2 ≤ 20 nm.

The thickness d2 may be 1 nm, 2 nm, 3 nm, 5 nm, 10 nm, 15 nm, 20 nm or any value within the above range.

In a case where d2 does not exceed 20 nm, the length of lithium ion transport path is appropriate, facilitating improvement of the capacity of the battery cell.

In a case where d2 is not less than 1 nm, the second coating layer 12 may provide certain protection, suppressing side reactions between the positive electrode base material 10 and the electrolyte solution, facilitating improvement of cycling performance of the battery cell.

Optionally, 4 nm ≤ d2 ≤ 10 nm. In this case, the battery cell has a high capacity and good cycling performance.

In some embodiments, based on a total mass of the positive electrode active material 1, a mass content B of the second coating layer 12 satisfies: 1000 ppm < B ≤ 3000 ppm; and optionally, 1000 ppm < B ≤ 2000 ppm.

B may be 1000 ppm, 1500 ppm, 2000 ppm, 3000 ppm or any value within the above range.

In this way, the second coating layer 12 has an appropriate mass proportion, so that the second coating layer 12 has an appropriate thickness.

In some embodiments, a particle size distribution by volume of the positive electrode active material 1 satisfies: (Dᵥ901 -Dᵥ101)/Dᵥ501 ≥ 1.2; and optionally, (Dᵥ901 - Dᵥ101)/Dᵥ501 ≥ 1.3.

Dᵥ10 may refer to a particle size at which a cumulative particle size distribution by volume of a sample reaches 10%, meaning that 10% of particles are smaller than this size.

Dᵥ50 may refer to a particle size at which a cumulative particle size distribution by volume of a sample reaches 50%, meaning that 50% of particles are smaller than this size. The Dᵥ501 herein is to distinguish from Dᵥ502 below, representing median particle sizes by volume of different materials.

Dᵥ90 may refer to a particle size at which a cumulative particle size distribution by volume of a sample reaches 90%, meaning that 90% of particles are smaller than this size. The Dᵥ901 and Dᵥ101 herein are used to represent Dᵥ90, Dᵥ10 of the positive electrode active material 1.

In this way, the positive electrode active material 1 includes both an appropriate content of larger particles and an appropriate content of smaller particles. The positive electrode active material 1 has a wider distribution of particle sizes, facilitating improvement of a powder compacted density of the positive electrode active material 1, thereby facilitating improvement of a volumetric energy density of the battery cell.

In some embodiments, a particle size distribution by volume Dᵥ501 of the positive electrode active material 1 satisfies: 7 µm ≤ Dᵥ501 ≤ 12 µm; and optionally, 8 µm ≤ Dᵥ501 ≤ 10 µm. In this way, a length of a path for lithium ion deintercalation from the positive electrode active material 1 is appropriate, and the battery cell has a high capacity and good cycling performance.

It should be noted that Dᵥ501 and Dᵥ502 in embodiments of this application both represent a median particle size by volume of a material, where "1" in Dᵥ501 and "2" in Dᵥ502 are used to distinguish median particle sizes by volume of different materials. Similarly, "1" in Dᵥ901 and Dᵥ101, and "2" in Dᵥ502 are used to distinguish median particle sizes by volume of different materials.

In some embodiments, the positive electrode active material 1 is a material obtained through reactions between the secondary particles of the positive electrode base material 10 and an ammonium salt. During the reaction process, the ammonium salt and its decomposition products may infiltrate grain boundaries of the positive electrode base material 10, thereby forming the first coating layer 11 and the second coating layer 12 on a surface of the primary particle of the positive electrode base material 10.

In some embodiments, the first coating layer 11 includes a material having a spinel structure with lithium vacancies.

The spinel structure may refer to a crystal structure of a material. A material with a spinel structure has three-dimensional lithium ion transport channels, facilitating improvement of lithium ion transport rate, thereby facilitating improvement of rate performance of the battery cell.

The positive electrode base material 10 may react with the ammonium salt, a product of the ammonium salt decomposed upon heating may react with an oxide of lithium (for example, Li₂O) in the positive electrode base material 10 and residual lithium on the surface, thereby generating lithium vacancies on the surface of the positive electrode base material, and the surface of the positive electrode base material transitions from a layered structure to a spinel structure, thereby generating the first coating layer including the material having the spinel structure. Take ammonium tungstate as an example. The generation of lithium vacancies is as follows: ammonium tungstate decomposes upon heating to produce NH₃ and WO₃; NH₃ and WO₃ react with the surface of the positive electrode base material 10; and WO₃ reacts with Li₂O in a crystal lattice of the surface layer of the positive electrode base material and surface residual lithium, causing lithium vacancies in the surface layer of the positive electrode base material, thereby transitioning from a layered structure to a spinel structure, generating a first coating layer of spinel phase and a second coating layer of Li₂WO₃.

The positive electrode active material is described above with reference to FIG. 1 to FIG. 3, and the preparation method for the positive electrode active material is described below with reference to FIG. 4. For parts corresponding or similar to the products of the positive electrode active material in the preparation method, reference may be made to the above description and is not be repeated below.

### [Preparation method for positive electrode active material]

FIG. 4 is a schematic diagram of a preparation method for a positive electrode active material according to an embodiment of this application. As shown in FIG. 4, an embodiment of this application provides a preparation method 200 of a positive electrode active material, including the following steps. The method 200 may be used to prepare the positive electrode active material 1 in any of the above embodiments.

Step 210: Prepare a positive electrode base material 10.

The positive electrode base material 10 may be a layered lithium-containing transition metal oxide, such as a ternary material.

Step 220: Prepare a first coating layer 11 and a second coating layer 12 on a surface of primary particles of the positive electrode base material 10 to obtain the positive electrode active material.

For example, in step 220, the first coating layer 11 is obtained by acid etching and sintering, and then the second coating layer 12 is obtained by mixing with an ion conductor material and sintering.

In some embodiments, step 220 includes: mixing and sintering the positive electrode base material 10 and an ammonium salt in an inert atmosphere to obtain the positive electrode active material 1.

The inert atmosphere may be a nitrogen atmosphere or an argon atmosphere. Sintering in an inert atmosphere facilitates the formation of the first coating layer 11.

The positive electrode base material 10 may react with the ammonium salt, so that the first coating layer 11 is generated on the surface of the positive electrode base material 10. Additionally, a compound of the ammonium salt decomposed upon heating may react with the residual lithium on the surface of the positive electrode base material 10, generating the second coating layer 12 while consuming the residual lithium. Therefore, through the reactions of the positive electrode base material 10 with the ammonium salt, the positive electrode active material 1 in this embodiment of this application can be prepared. Additionally, this method is relatively simple because the first coating layer 11 and the second coating layer 12 may be formed through fewer sintering cycles.

In some embodiments, the mixing and sintering the positive electrode base material 10 and an ammonium salt in an inert atmosphere to obtain the positive electrode active material 1 includes: mixing the positive electrode base material 10 and the ammonium salt in a high-energy ball mill; sintering the mixed positive electrode base material 10 and ammonium salt in the inert atmosphere to obtain the positive electrode active material 1.

During ball milling in the high-temperature ball mill and sintering, the ammonium salt may melt and infiltrate grain boundaries of the positive electrode base material 10, allowing the ammonium salt to fully contact the surface of the primary particles of the positive electrode base material 10; the ball milling process facilitates mixing of the ammonium salt with the positive electrode base material 10, enabling uniform distribution of the ammonium salt on the surface and at grain boundaries of the primary particles of the positive electrode base material 10. During sintering, ammonia gas produced by decomposition of the ammonium salt reacts with the positive electrode base material 10 to form a material with a spinel structure having lithium vacancies, thereby forming the first coating layer 11; additionally, a compound of the decomposed ammonium salt may react with the residual lithium on the surface of the positive electrode base material 10, generating the second coating layer 12 while consuming the residual lithium.

In some embodiments, a rotational speed V of the high-energy ball mill satisfies: 500 rpm ≤ V ≤ 1400 rpm; and optionally, 800 rpm ≤ V ≤ 1200 rpm.

V may be 500 rpm, 600 rpm, 800 rpm, 1000 rpm, 1200 rpm, 1400 rpm, or any value within the above range.

In some embodiments, a ball milling time t1 satisfies: 0.5 h ≤ t1 ≤ 3 h; and optionally, 1 h ≤ t1 ≤ 2 h.

The time t1 may be 0.5 h, 1 h, 2 h, 3 h or any value within the above range.

At the above rotational speed and/or ball milling time, energy generated by high-energy ball milling promotes interaction between the ammonium salt and the positive electrode base material 10, allowing the ammonium salt to enter grain boundary gaps of the positive electrode base material 10, thereby facilitating the reactions between the ammonium salt and the positive electrode base material 10.

In some embodiments, a sintering temperature T1 satisfies: 400°C ≤ T1 ≤ 600°C; and optionally, 400°C ≤ T1 ≤ 500°C.

T1 may be 400°C, 500°C, 600°C or any value within the above range.

In a case where temperature T1 is not less than 400°C, a risk of inadequate reactions between the positive electrode base material 10 and the ammonium salt due to a low temperature can be reduced; in the case where temperature T1 does not exceed 600°C, a risk of formation of a relatively large amount of oxygen vacancies inside the positive electrode base material 10 due to a high temperature can be reduced, lowering a risk of deterioration in performance of the positive electrode active material 1 and performance of the battery cell.

In some embodiments, a sintering time t2 satisfies: 4 h ≤ t2 ≤ 8 h; and optionally, 5 h ≤ t2 ≤ 6 h.

The time t2 may be 4 h, 5 h, 6 h, 8 h, 10 h, or any value within the above range.

In a case where t1 is not less than 4 h, a risk of insufficient reactions between the positive electrode base material 10 and the ammonium salt due to short time can be reduced. In a case where t1 does not exceed 6 h, a risk of formation of a relatively large amount of oxygen vacancies inside the positive electrode base material 10 due to long time can be reduced.

The above sintering temperature and sintering time facilitate decomposition of the ammonium salt and reactions of the decomposition product of the ammonium salt with the positive electrode base material 10 and residual lithium, facilitating preparation of the first coating layer 11 and the second coating layer 12.

In some embodiments, the ammonium salt includes at least one of W, Mo, or P element. W, Mo, or P element may react with lithium element in the residual lithium to form a corresponding lithium-containing compound, thereby forming the second coating layer 12.

In some embodiments, the ammonium salt includes at least one of ammonium molybdate, ammonium paramolybdate, ammonium metatungstate, ammonium phosphate, ammonium hydrogen phosphate, or ammonium dihydrogen phosphate. The above ammonium salts include W, Mo, or P element and have an appropriate melting point, facilitating decomposition during sintering

In some embodiments, step 210 includes: preparing a precursor of the positive electrode base material 10; mixing and sintering the precursor, a lithium salt, and a compound containing M element to prepare the positive electrode base material 10, where M element includes at least one of Zr, Al, Ti, Sb, Nb, Te, Mg, Al, Ca, V, Ta, or Sr.

As an example, the positive electrode base material 10 is a ternary material, and a chemical formula of the precursor of the positive electrode base material 10 is [NiₓCo_{y}Mn_{z}](OH)₂, where 0.6 ≤ x ≤ 1,0 ≤ y ≤ 0.4, and 0 ≤ z ≤ 0.4. Optionally, 0.8 ≤ x < 1.

The precursor, lithium salt, and compound containing M element can be sintered in air or an O₂ atmosphere. The lithium salt may be at least one of lithium carbonate or lithium hydroxide.

As an example, mixing may be specifically performed through the following operations. The precursor, lithium salt, and compound containing M element are added at a certain ratio to a ploughshare mixer, high-intensity mixer, or inclined mixer for mixing, and then sintered in an air atmosphere.

As an example, the positive electrode base material 10 is a ternary material, and the precursor of the positive electrode base material 10 may be prepared through the following steps. (1) Synthesize a seed crystal: Prepare a mixed metal solution of nickel salt, cobalt salt, and manganese salt with a concentration of 0.5 mol/L to 2.5 mol/L according to a molar ratio of nickel, cobalt, and manganese in the ternary material; prepare a NaOH alkali solution with a concentration of 1 mol/L to 10 mol/L, prepare an ammonia solution with a concentration of 2 mol/L to 14 mol/L, add 10% to 50% pure water to a 100 L reaction kettle, start stirring, maintain a constant temperature of 40°C to 75°C, add a certain amount of NaOH solution until pH is 11.5~12.5, optionally 11.8 to 12.2, and add a certain amount of ammonia solution until an ammonia concentration is 0.2 mol/L to 0.6 mol/L, optionally 0.3 mol/L to 0.5 mol/L. Add the prepared nickel cobalt manganese mixed metal solution, NaOH alkali solution, ammonia solution in parallel flow to the reaction kettle at certain flow rates, and maintain the ammonia concentration and pH in the reaction kettle unchanged for continuous reactions to synthesize a seed crystal slurry product with a particle size distribution by volume Dᵥ50 of 1 µm to 5 µm. (2) Synthesize a precursor: Add 10% to 50% pure water to a 100 L reaction kettle, add 1 kg to 20 kg of the seed crystal core slurry synthesized in step (1), start stirring, maintain a constant temperature of 40°C to 75°C, add the NaOH solution until pH is 11.0 to 12.0, optionally 11.1 to 11.7, and add a certain amount of ammonia solution until an ammonia concentration is 0.2 mol/L to 0.6 mol/L, optionally 0.3 mol/L to 0.5 mol/L. Add the nickel cobalt manganese mixed metal solution, NaOH alkali solution and ammonia solution and the seed crystal slurry synthesized in step (1) in parallel flow to the reaction kettle at certain flow rates, and maintain the ammonia concentration and pH in the reaction kettle unchanged for continuous reactions to synthesize a slurry product with a certain particle size distribution by volume. Then, centrifuge, wash, filter, dry the product slurry to obtain the precursor.

In this embodiment, the positive electrode base material 10 containing M element can be obtained through mixing and sintering the precursor, the lithium salt and the compound containing M element, and therefore the positive electrode base material 10 has high crystal structure stability.

In some embodiments, a molar ratio C of the lithium salt to the metal element in the precursor satisfies: 0.95 ≤ C ≤ 1.15; and/or a sintering temperature T2 satisfies: 650°C ≤ T2 ≤ 950°C; and/or a sintering time t3 satisfies: 10 h ≤ t2 ≤ 20 h.

The metal element in the precursor includes three elements, namely, nickel cobalt, and manganese, and C is a ratio of a mole amount of the lithium salt to a total mole amount of the nickel, cobalt, and manganese elements.

C may be 0.95, 1, 1.15 or any value within the above range; T2 may be 650°C, 800°C, 950°C or any value within the above range; t3 may be 10 h, 15 h, 20 h or any value within the above range.

In some embodiments, based on a total mass of the precursor, the lithium salt, the compound containing M element, a mass content D of the compound containing M element satisfies: 200 ppm < D < 5000 ppm. For example, D is 200 ppm, 1000 ppm, 3000 ppm, 5000 ppm or any value within the above range.

Reasonably setting the temperature and time of sintering the precursor, the lithium salt, and the compound containing M element, and the mass content of the compound containing M element helps to obtain the positive electrode base material 10 uniformly doped with M element. The positive electrode base material 10 uniformly doped with M element has higher stability.

In some embodiments, a particle size distribution by volume Dᵥ502 of the precursor satisfies: 7 µm ≤ Dᵥ502 ≤ 12 µm; and optionally, 8 µm ≤ Dᵥ502 ≤ 10 µm. This helps to obtain the positive electrode active material 1 having an appropriate particle size distribution by volume.

Dᵥ502 may be 7 µm, 8 µm, 10 µm, 12 µm or any value within the above range.

### [Positive electrode plate]

An embodiment of this application provides a positive electrode plate, including the positive electrode active material in any of the above embodiments, and/or the positive electrode active material prepared by using the preparation method in any of the above embodiments.

The positive electrode plate includes a positive electrode current collector and a positive electrode film layer provided on the positive electrode current collector, and the positive electrode film layer includes the positive electrode active material.

The positive electrode current collector may be a metal foil or a composite current collector. For example, the positive electrode current collector may be an aluminum foil.

The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

Optionally, the positive electrode film layer may further include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

Optionally, the positive electrode film layer may further include a conductive agent. The conductive agent may include at least one of superconducting carbon, acetylene black, carbon black, Ketjenblack, carbon dots, carbon nanotubes, graphene and carbon nanofibers.

### [Negative electrode plate]

The negative electrode plate includes a negative electrode current collector and a negative electrode film layer provided on the negative electrode current collector.

The negative electrode current collector may be a metal foil or a composite current collector. The negative electrode current collector may be a copper foil. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

The negative electrode film layer includes a negative electrode active material. The negative electrode active material may be a negative electrode active material known in the art for batteries. As an example, the negative electrode active material may include at least one of the following materials: artificial graphite, natural graphite, soft carbon, hard carbon, silicon-based material, tin-based material, lithium titanate, and the like. The silicon-based material may include at least one of elemental silicon, silicon oxide compound, silicon carbon composite, silicon nitrogen composite, and silicon alloy. The tin-based material may include at least one of elemental tin, tin oxide compound, and tin alloy. However, this application is not limited to these materials, other conventional materials that can be used as negative electrode active materials for batteries can also be used. Only one of these negative electrode active materials may be used, or two or more may be combined.

Optionally, the negative electrode film layer may further include a conductive agent. The conductive agent may include at least one of superconducting carbon, acetylene black, carbon black, Ketjenblack, carbon dots, carbon nanotubes, graphene, and carbon nanofibers.

### [Electrolyte]

The electrolyte conducts ions between the positive electrode plate and the negative electrode plate. A type of the electrolyte is not specifically limited in these embodiments of this application, and may be selected according to needs. For example, the electrolyte may be liquid, gel, or all-solid-state.

In some embodiments, the electrolyte is an electrolyte solution. The electrolyte solution includes an electrolytic salt and a solvent.

The electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

The solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

Optionally, the electrolyte may further include negative electrode film-forming additive and positive electrode film-forming additive, and may further include performance additives that can improve certain performance of the battery, for example, performance additives that improve overcharge performance of the battery, high-temperature or low-temperature performance of the battery, and the like.

### [Separation member]

The separation member is used to separate the positive electrode plate and the negative electrode plate from each other. A type of the separation member is not specifically limited in these embodiments of this application, and any known porous-structure separator having good chemical stability and mechanical stability can be used.

A material of the separation member may include at least one of glass fiber, non-woven fabric, polyethylene, polypropylene and polyvinylidene difluoride. The separation member may be a single-layer film or a multi-layer composite film. This is not particularly limited. When the separation member is a multi-layer composite film, materials of the layers may be the same or different. This is not particularly limited.

The positive electrode plate, the negative electrode plate, and the separation member may be made into an electrode assembly through a winding process or a stacking process.

### [Battery cell]

An embodiment of this application provides a battery cell, including the positive electrode plate in the above embodiment.

A shape of the battery cell is not particularly limited in embodiments of this application, and may be cylindrical, prismatic or another arbitrary shape. The battery cell may be a lithium-ion battery, lithium-sulfur battery, sodium-ion battery, magnesium-ion battery, or the like.

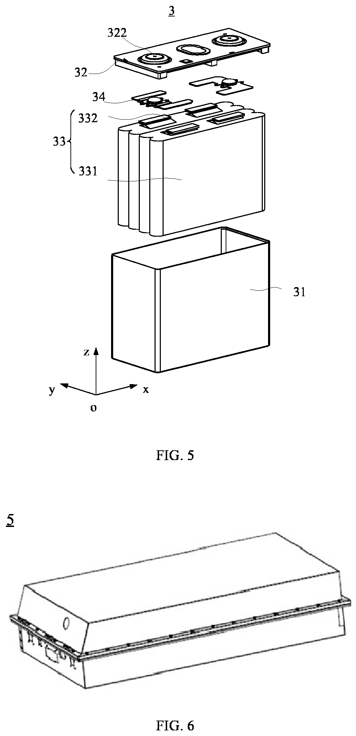

FIG. 5 is a schematic diagram of a battery cell according to an embodiment of this application. As shown in FIG. 5, a battery cell 3 includes a housing 31, an end cap assembly 32, and an electrode assembly 33. The electrode assembly 33 is provided in the housing 31, and the end cap assembly 32 is configured to close the housing 31.

The end cap assembly 32 includes an electrode terminal 322. For example, as shown in FIG. 5, the end cap assembly 32 includes two electrode terminals 322, where one is positive electrode terminal and the other is a negative electrode terminal.

The electrode assembly 33 includes an electrode assembly body 331 and a tab 332 extending from the electrode assembly body 331. The electrode assembly 33 may be made by the positive electrode plate, the negative electrode plate and the separation member through a winding process or a stacking process.

The battery cell 3 further includes a current collecting member 34. The current collecting member 34 is configured to connect the tab 332 of the electrode assembly 33 and the electrode terminal 322. For example, as shown in FIG. 3, the battery cell 3 includes two current collecting members 34, where one current collecting member 34 is configured to connect a positive electrode tab and a positive electrode terminal, and the other current collecting member 34 is configured to connect a negative electrode tab and a negative electrode terminal.

In some embodiments, the battery cell may be assembled into a battery module. One or more battery cells may be contained in the battery module, and a specific quantity may be determined by those skilled in the art according to the application and capacity of the battery module.

### [Battery]

An embodiment of this application provides a battery, including a battery cell in the above embodiments. FIG. 6 is a schematic diagram of a battery according to an embodiment of this application. As shown in FIG. 6, a battery 5 may include multiple battery cells (not shown in the figure).

Battery cells 3 may directly form a battery 5, or may first form a battery module, and then multiple battery modules form a battery 5.

### [Electric apparatus]

An embodiment of this application provides an electric apparatus, including a battery described in the above embodiments.

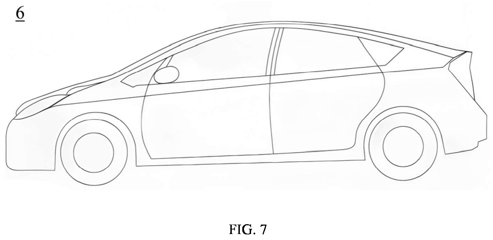

FIG. 7 is a schematic diagram of an electric apparatus according to an embodiment of this application. As shown in FIG. 7, this application provides an electric apparatus 6, including a battery in the above embodiments.

Optionally, the electric apparatus may alternatively be an energy storage apparatus, a lighting apparatus, a spacecraft, or the like. This embodiment of this application includes these apparatuses but is not limited thereto.

The following describes embodiments of this application. The embodiments described below are exemplary and are only used to explain this application, and cannot be understood as limiting this application. In embodiments where specific techniques or conditions are not specified, the techniques or conditions described in the literature in the field or according to product instructions are followed. Reagents or instruments used without specifying the manufacturer are conventional products that can be obtained commercially.

### [Examples]

### Example 1

A positive electrode active material in Example 1 was prepared through the following steps.

### (1) A precursor of positive electrode base material was synthesized.

In the precursor of the positive electrode base material, a molar ratio of the three elements-nickel, cobalt, and manganese-was set at 92:7:1. A particle size distribution by volume Dᵥ502 of the precursor was determined to be 8.5 µm, and a particle size distribution by volume (Dᵥ902 - Dᵥ102)/Dᵥ502 of the precursor was calculated as 1.35.

### (2) A positive electrode active material was synthesized.

S1: The lithium salt, Nb₂O₃, ZrO₂, and the above precursor were added and mixed in a specified ratio to a ploughshare mixer. A Li/Me molar ratio was set at 1.05 (Me represented a total mole amount of the three elements, namely, nickel, cobalt, and manganese). A Nb doping amount was 500 ppm, and a Zr doping amount was 2000 ppm. The mixed material was placed in a kiln and sintered at a temperature T2 of 750°C for a sintering time t3 of 20 h in a sintering atmosphere O₂. A positive electrode base material uniformly doped with Nb and Zr was obtained through sintering. The doping amounts of Nb and Zr were based on a total weight of the positive electrode base material.

S2: The positive electrode base material and ammonium molybdate were added to a high-energy ball mill and mixed at a rotational speed V of 1000 rpm for a ball milling time t1 of 2 h. An addition amount of Mo element was 2000 ppm. The mixed material was placed in a kiln and sintered at a temperature T1 of 400°C for a sintering time t2 of 6 h in a sintering atmosphere N₂. A positive electrode active material of primary particles was obtained, where a first coating layer included a material having a spinel structure with lithium vacancies, and a second coating layer included Li₂MoO₄. A doping amount of Mo element was based on the total weight of the positive electrode base material.

In Example 1, the positive electrode base material was LiNi_{0.92}Co_{0.07}Mn_{0.01}O₂. A thickness d1 of the first coating layer was 2 nm, a thickness d2 of the second coating layer was 6 nm, and a mass content B of the second coating layer was 2000 ppm. A particle size distribution by volume Dᵥ501 of the positive electrode active material was 8.7 µm, and (Dᵥ901 - Dᵥ101)/Dᵥ501 was 1.35.

### Example 2

Differences between Example 2 and Example 1 were that the addition amount of Mo element was set at 1000 ppm, and correspondingly, in the prepared positive electrode active material, a thickness d2 of the second coating layer was 4 nm.

### Example 3

A difference between Example 3 and Example 1 was that, in step S2, the addition amount of Mo element was set at 3000 ppm.

In the prepared positive electrode active material, a thickness d2 of the second coating layer was 9 nm, and a mass content B of the second coating layer was 3000 ppm.

### Example 4

Differences between Example 4 and Example 1 were that the addition amount of Mo element was set at 5000 ppm, and correspondingly, in the prepared positive electrode active material, a thickness d1 of the first coating layer was 5 nm, and a thickness d2 of the second coating layer was 20 nm.

### Example 5

Differences between Example 5 and Example 1 were that, in step S2, the ammonium salt was ammonium metatungstate, and the sintering temperature T1 was set at 500°C correspondingly.

In the prepared positive electrode active material, a thickness d2 of the second coating layer was 5 nm, the mass content B of the second coating layer was 2000 ppm, and the second coating layer included Li₂WO₄.

### Example 6

Differences between Example 6 and Example 1 were that, in step S2, the ammonium salt was ammonium phosphate, the addition amount of P element was set at 2500 ppm, and a sintering temperature T1 was set at 400°C correspondingly.

In the prepared positive electrode active material, a thickness d2 of the second coating layer was 4.5 nm, a mass content B of the second coating layer was 2500 ppm, and the second coating layer included Li₃PO₄.

### Example 7

Differences between Example 7 and Example 1 were that, in step S2, ammonium metatungstate was additionally added with the addition amount of W element set at 1000 ppm, and the sintering temperature T1 was set at 450°C correspondingly.

In the prepared positive electrode active material, the thickness d2 of the second coating layer was 10 nm, the mass content B of the second coating layer was 3000 ppm, and the second coating layer included Li₂MoO₄ and Li₂WO₄.

### Example 8

Differences between Example 8 and Example 1 were that, in step S2, the ammonium salt was ammonium molybdate and ammonium dihydrogen phosphate, the addition amount of Mo element was set at 1000 ppm, the addition amount of P element was set at 1000 ppm, and the sintering temperature T1 was set at 450°C correspondingly.

In the prepared positive electrode active material, a thickness d2 of the second coating layer was 8.5 nm, a mass content B of the second coating layer was 3000 ppm, and the second coating layer included Li₂MoO₄ and Li₃PO₄.

### Examples 9 and 10

A difference of Examples 9 and 10 from Example 1 was that the particle size distribution by volume (Dᵥ901 - Dᵥ101)/Dᵥ501 of the positive electrode active material was different.

In Examples 1 to 10, the positive electrode base materials were identical. In the process of preparing the positive electrode active material, the sintering time t2 was set at 6 h, the ball milling rotational speed was set at 1000 rpm, and a ball milling time t1 was set at 2 h.

### Example 11

A difference between Example 11 and Example 1 was that, in step S1, Nb₂O₅ was replaced with Ta₂O₅, and a doping amount of Ta was set at 500 ppm.

### Example 12

The difference between Example 12 and Example 1 was that, in step S1, ZrO₂ was replaced with TiO₂, and a doping amount of Ti was set at 1000 ppm.

### Example 13

Differences between Example 13 and Example 1 were that, in step S1, SrCO₃ was added with a doping amount of Sr set at 1000 ppm, and a sintering temperature T2 was set at 730°C.

### Example 14

The difference between Example 14 and Example 1 was that, in step S1, Nb₂O₃ and ZrO₂ were not added.

### Example 15

Differences between Example 15 and Example 1 were that, in step S1, Nb₂O₃ was replaced with TiO₂, and the doping amount of Ti was set at 750 ppm. In step S2, ammonium molybdate was replaced with ammonium phosphate, and an addition amount of P element was set at 2500 ppm.

In Examples 11 to 15, the positive electrode base materials were different. In the process of preparing the positive electrode active material, the sintering temperature T1 was set at 400°C, the sintering time t2 was set at 6 h, a ball milling rotational speed was set at 1000 rpm, a ball milling time t1 was set at 2 h, and a (Dᵥ901 - Dᵥ101)/Dᵥ501 of the positive electrode active material was identical.

### Examples 16 to 19

A difference of Examples 16 to 19 from Example 1 was that the median particle size by volume Dᵥ501 of the positive electrode active material was different.

### Examples 20 and 21

Differences of Examples 20 and 21 from Example 1 were that the reaction temperature and time of the ammonium salt and the precursor were different.

### Comparative example 1

The difference between Comparative example 1 and Example 1 was that the positive electrode active material in Comparative example 1 was a positive electrode base material without a coating layer.

### Comparative example 2

The difference between Comparative example 2 and Example 1 was that, in step S2, a positive electrode base material uniformly doped with Nb and Zr and Li₂MoO₄ were added to and mixed in a high-energy ball mill. The mixed material was placed in a kiln and sintered in a sintering atmosphere O₂, and a high-nickel ternary positive electrode material coated with Li₂MoO₄ was obtained through sintering without a first coating layer. Other conditions were identical to those in Example 1.

**Table 1 Experimental parameters of Examples 1 to 19 and Comparative examples 1 and 2**

| | Positive electrode active material | | | | | | |
|---|---|---|---|---|---|---|---|
| | Positive electrode base material | First coating layer | Second coating layer | | | Dᵥ50 1 (µm) | (Dᵥ901 - Dᵥ101) / Dᵥ501 |
| | | Thickness d1 (nm) | Material | Thickness d2 (nm) | Mass content B (ppm) | | |
| Example 1 | LiNi_{0.9175}Co_{0.0698}Mn_{0.101}Zr_{0.0021}Nb_{0.0005} O₂ | 2 | Li₂MoO ₄ | 6 | 2000 | 8.7 | 1.35 |
| Example 2 | LiNi_{0.9175}Co_{0.0698}Mn_{0.0101}Zr_{0.002}Nb_{0.0005} O₂ | 1 | Li₂MoO ₄ | 4 | 1000 | 8.7 | 1.35 |
| Example 3 | LiNi_{0.9175}Co_{0.0698}Mn_{0.0101}Zr_{0.0021}Nb_{0.0005} O₂ | 4 | Li₂MoO ₄ | 9 | 3000 | 8.8 | 1.35 |
| Example 4 | LiNi_{0.9175}Co_{0.0698}Mn_{0.0101}Zr_{0.0021}Nb_{0.0005} O₂ | 5 | Li₂MoO ₄ | 20 | 5000 | 8.7 | 1.35 |
| Example 5 | LiNi_{0.9175}Co_{0.0698}Mn_{0.01001}Zr_{0.021}Nb_{0.0005} O₂ | 2 | Li₂WO₄ | 5 | 2000 | 8.9 | 1.35 |
| Example 6 | LiNi_{0.9175}Co_{0.0698}Mn_{0.0101}Zr_{0.0021}Nb₀.₀₀₀₅ O₂ | 2.5 | Li₃PO₄ | 4.5 | 2000 | 8.8 | 1.35 |
| Example 7 | LiNi_{0.9175}Co_{0.0698}Mn_{0.01 01}Zr_{0.0021}Nb_{0.0005} O₂ | 3.5 | Li₂MoO ₄ and Li₂WO₄ | 10 | 3000 | 8.5 | 1.35 |
| Example 8 | LiNi_{0.9175}Co_{0.0608}Mn_{0.0101}Zr_{0.0021}Nb_{0.0005} O₂ | 3 | Li₂MoO ₄ and Li₃PO₄ | 8.5 | 2000 | 8.5 | 1.35 |
| Example 9 | LiNi_{0.9175}Co_{0.0698}Mn_{0.0101}Zr_{0.0021}Nb₀.₀₀₀₅ O₂ | 2 | Li₂MoO ₄ | 6 | 2000 | 8.4 | 1.2 |
| Example 10 | LiNi_{0.9175}Co_{0.0698}Mn_{0.0101}Zr_{0.0021}Nb_{0.0005} O₂ | 2 | Li₂MoO ₄ | 6 | 2000 | 8.5 | 1.3 |
| Example 11 | LiNi_{0.9177}Co_{0.0698}Mn_{0.0101}Zr_{0.0021}Ta_{0.0003} O₂ | 1.5 | Li₂MoO ₄ | 6 | 2000 | 8.6 | 1.35 |
| Example 12 | LiNi_{0.9176}Co_{0.0698}Mn_{0.0101}Ti_{0.0020}Nb_{0.0005} O₂ | 2 | Li₂MoO ₄ | 5 | 2000 | 8.7 | 1.35 |
| Example 13 | LiNi_{0.9175}Co₀₀₆₉₈Mn_{0.0101}Zr_{0.0021}Nb_{0.0005} O₂ | 2 | Li₂MoO ₄ | 6 | 2000 | 8.5 | 1.35 |
| Example 14 | LiNi_{0.92}Co_{0.07}Mn_{0.01}O₂ | 2 | Li₂MoO ₄ | 6.5 | 2000 | 8.8 | 1.35 |
| Example 15 | LiNi_{0.9166}Co_{0.0697}Mn_{0.0101}Zr_{0.0021}Ti_{0.0015} O₂ | 3 | Li₃PO₄ | 8 | 2500 | 8.6 | 1.35 |
| Example 16 | LiNi_{0.9175}Co_{0.0698}Mn_{0.0101}Zr_{0.0021}Nb₀.₀₀₀₅ O₂ | 2 | Li₂MoO ₄ | 6 | 2000 | 7 | 1.35 |
| Example 17 | LiNi_{0.9175}Co_{0.0698}Mn_{0.0101}Zr_{0.0021}Nb_{0.0005} O₂ | 2 | Li₂MoO ₄ | 6 | 2000 | 8 | 1.35 |
| Example 18 | LiNi_{0.9175}Co_{0.0698}Mn_{0.0101}Zr_{0.0021}Nb_{0.0005} O₂ | 2 | Li₂MoO ₄ | 6 | 2000 | 10 | 1.35 |
| Example 19 | LiNi_{0.9175}Co_{0.0698}Mn_{0.0101}Zr_{0.0021}Nb_{0.0005} O₂ | 2 | Li₂MoO ₄ | 6 | 2000 | 12 | 1.35 |
| Comparative example 1 | LiNi_{0.9175}Co_{0.0698}Mn_{0.0101}Zr_{0.0021}Nb_{0.0005} O₂ | / | / | / | / | / | / |
| Comparative example 2 | LiNi_{0.9175}Co_{0.0698}Mn_{0.0101}Zr_{0.0021}Nb_{0.0005} O₂ | / | Li₂MoO ₄ | 6 | 2000 | 8.7 | 1.35 |

**Table 2 Experimental parameters of Examples 20 and 21**

| | Positive electrode active material | | | | | | Preparation of positive electrode active material | |
|---|---|---|---|---|---|---|---|---|
| | First coating layer | Second coating layer | | | Dᵥ50 1 (µm) | (Dᵥ901 - Dᵥ101)/Dᵥ50 1 | Sintering temperature T1 (°C) | Sintering time t2 (h) |
| | Thickness d1 (nm) | Material | Thickness d2 (nm) | Mass content B (ppm) | | | | |
| Example 20 | 1.5 | Li2MoO4 | 5 | 2000 | 9 | 1.35 | 600 | 4 |
| Example 21 | 1.5 | Li2MoO4 | 4 | 2000 | 8.8 | 1.35 | 500 | 5 |

**Table 3 Performance test results in examples and comparative examples**

| | Capacity retention rate (%) | First efficiency of button cell (%) | First efficiency of full battery (%) | DCR (mΩ) |
|---|---|---|---|---|
| Example 1 | 93.52% | 93.30 | 91.1 | 509.5 |
| Example 2 | 92.98% | 92.17 | 90.58 | 574.1 |
| Example 3 | 91.22% | 92.21 | 90.19 | 525.6 |
| Example 4 | 87.93% | 90.25 | 90.14 | 587.7 |
| Example 5 | 92.39% | 92.90 | 90.39 | 559.1 |
| Example 6 | 93.73% | 93.10 | 90.98 | 534.1 |
| Example 7 | 89.54% | 91.90 | 90.02 | 518.3 |
| Example 8 | 89.73% | 92.50 | 90.1 | 528.9 |
| Example 9 | 90.84% | 91.02 | 90.47 | 548.9 |
| Example 10 | 91.36% | 92.10 | 90.38 | 521.8 |
| Example 11 | 92.55% | 92.75 | 90.45 | 544.6 |
| Example 12 | 91.19% | 91.85 | 90.09 | 514.8 |
| Example 13 | 92.88% | 92.58 | 90.87 | 535.3 |
| Example 14 | 88.93% | 92.97 | 90.00 | 550.9 |
| Example 15 | 90.04% | 91.88 | 90.48 | 572.2 |
| Example 16 | 89.10% | 92.73 | 89.82 | 594.7 |
| Example 17 | 90.12% | 91.56 | 90.20 | 562.3 |
| Example 18 | 91.58% | 90.37 | 90.75 | 593.8 |
| Example 19 | 91.96% | 92.51 | 89.18 | 589.5 |
| Example 20 | 88.36% | 90.54 | 89.95 | 548.3 |
| Example 21 | 90.13% | 91.22 | 90.09 | 557.9 |
| Comparative example 1 | 85.89% | 87.59 | 86.70 | 676.3 |
| Comparative example 2 | 85.11% | 88.94 | 87.98 | 631.3 |

### [Preparation of battery cell]

(1) Preparation of positive electrode plate: A positive electrode active material, a binder polyvinylidene fluoride (PVDF), and a conductive agent (acetylene black) were added to a solvent N-methylpyrrolidone (NMP) in a mass ratio of 94:3:3, fully stirred, and mixed uniformly to prepare a positive electrode slurry. The positive electrode slurry was uniformly applied to a positive electrode current collector aluminum foil, then dried, cold pressed, and slit to obtain a positive electrode plate.
(2) Preparation of negative electrode plate: A negative electrode active material artificial graphite and hard carbon, a conductive agent acetylene black, a binder styrene-butadiene rubber (SBR), and a thickener sodium carboxymethyl cellulose (CMC) were added to deionized water in a mass ratio of 90:5:2:2:1, fully stirred, and mixed uniformly to prepare a negative electrode slurry. The negative electrode slurry was applied to a negative electrode current collector copper foil, then dried, cold pressed, and slit to obtain a negative electrode plate.
(3) Separator: A polyethylene film was used.
(4) Preparation of lithium-ion battery cell: The positive electrode plate, separator, and negative electrode plate were stacked in order and wound to obtain an electrode assembly. The electrode assembly was placed in an outer packaging, an electrolyte solution with lithium hexafluorophosphate as the electrolytic salt was added, and after encapsulation, standing, formation, and aging processes, a lithium-ion battery cell was obtained.

### [Preparation of button cell]

A positive electrode active material, PVDF, and conductive carbon were added to a certain amount of NMP in a ratio of 90:5:5, and stirred in a dry room to prepare a slurry, and the slurry was applied to an aluminum foil. A positive electrode plate was obtained through drying and cold pressing. A lithium sheet was used as a negative electrode. An electrolyte solution contained LiPF₆ as the electrolytic salt, with a solvent of EC, DEC, and DMC in a volume ratio of 1:1:1, and a concentration of the electrolytic salt was set at 1 mol/L. The components were assembled into a button cell in a button cell case.

It should be noted that the mass contents of the first coating layer and the second coating layer in the positive electrode active material, the median particle size by volume of the positive electrode active material, the cycling performance of the battery cell, and the like as described in these embodiments of this application, are common knowledge in the art, have meanings well-known in the art, and can be measured by using test methods and instruments well-known in the art.

### [Test of first coating layer and second coating layer]

Positive electrode active material particles were placed in a transmission electron microscope in conventional mode, HAADF mode, or ABF mode for observation. Through observation of EDS element surface distribution, it can be learned that one or more elements of W, Mo, and P were concentrated and distributed in grain boundaries of the positive electrode active material particles, thereby determining a second coating layer and a material of the second coating layer.

HAADF-STEM was used to observe a surface of primary particles of a positive electrode active material, and Fourier transform was performed, revealing a spinel phase on the surface of primary particles. In this way, a first coating layer was determined. Additionally, thicknesses of a first coating layer and a second coating layer were observed.

XPS was used to characterize relative contents of elements in a positive electrode base material and a first coating layer, and a concentration of Li was calculated. In this case, concentrations of lithium element in the positive electrode base material and the first coating layer were determined.

### [Test of initial specific capacity of button cell]

At 2.8V to 4.3V, the cell was charged to 4.3V at 0.1C; charged at a constant voltage of 4.3V until the current was less than or equal to 0.05 mA; and left standing for 2 min. In this case, a charge capacity was recorded as C0. Then the cell was discharged to 2.8V at 0.1C, and a discharge capacity was recorded as an initial specific capacity D0. A first efficiency was calculated as D0/C0 × 100%.

A higher first efficiency indicates a greater amount of lithium ions that can be reversibly deintercalated and intercalated. In a late stage of discharge, due to a decrease in lithium vacancies in a positive electrode active material, lithium ion diffusion inside particles of the positive electrode active material becomes slow, making lithium intercalation difficult. Constructing a first coating layer on a surface of a positive electrode active material can facilitate diffusion of lithium ions, improving a first efficiency of the material.

### [Test of initial specific capacity of lithium-ion battery cell]

In a constant temperature environment of 25°C, the cell was left standing for 5 min and then discharged to 2.8V at 1/3C; and left standing for 5 min and then charged to 4.25V at 1/3C; and charged at a constant voltage of 4.25V until the current was less than or equal to 0.05 mA. The cell was then left standing for 5 min, and a charge capacity was recorded as C0. The cell was then discharged at 2.8V at 1/3C, and a discharge capacity was recorded as an initial specific capacity D0. A first efficiency was calculated as D0/C0 × 100%.

### [Test of cycling performance of lithium-ion battery cell at 25°C/45°C]

In a constant temperature environment of 25°C or 45°C, at 2.8V to 4.25V, the cell was charged to 4.25V at 0.5C; charged at a constant voltage of 4.25V until the current was less than or equal to 0.05 mA. The battery was left standing for 5 min, and then discharged to 2.8V at 0.5C, with a capacity recorded as Dₙ (n = 0, 1, 2, and the like). The process was repeated for 500 cycles.

### [Direct current internal resistance of lithium-ion battery cell]

In a constant temperature environment of 25°C, at 2.8V to 4.25V, the cell was charged to 4.25V at 1/3C; then charged at a constant voltage of 4.25V until the current was less than or equal to 0.05 mA; then left standing for 30 min and discharged to 20% SOC at 1/3C; then left standing for 60 min and discharged at 4C for 30s; and then left standing for 30 min and charged at 4C for 30 s. In this way, a DCR at 20% SOC was obtained.

As shown in Examples and Comparative examples 1 and 2, provision of the first coating layer and the second coating layer on the surface of primary particles of the positive electrode base material helps to improve cycling performance of the battery cell. After a certain number of cycles, the battery cell prepared with the positive electrode active material in the embodiments of this application exhibits a higher capacity retention rate. Additionally, as shown in Examples and Comparative example 1, provision of the first coating layer in the embodiments of this application improves a first efficiency of a battery cell. As shown in Examples and Comparative examples 1 and 2, a battery cell prepared with the positive electrode active material in the embodiments of this application has a smaller direct current internal resistance.

As shown in Examples 1 to 4, in a process of preparing the positive electrode active material, ammonium salts of different contents are added, resulting in first coating layers and second coating layers of different thicknesses. A higher content of ammonium salt means a higher possibility of obtaining a first coating layer and a second coating layer with relatively large thicknesses.

As shown in Examples 5 and 6, multiple different types of ammonium salts may be used in the embodiments of this application. As shown in Examples 7 and 8, multiple different ammonium salts may be mixed and added to prepare a positive electrode active material.

As shown in Examples 9 and 10, when the particle size distribution by volume of the positive electrode active material satisfies that (Dᵥ90 - Dᵥ10)/Dᵥ50 falls in the range of 1.2 to 1.35, powder of the positive electrode active material has a relatively high compacted density (not shown in the table), and the compacted density may reach 3.5 g/cm³.

As shown in Examples 11, 13, and 15, multiple different M elements may be doped in the positive electrode base material to improve corresponding performance of the positive electrode base material. As shown in Example 14, M element may not be added in the positive electrode base material.

As shown in Examples 16 to 19, when the median particle size by volume of the positive electrode active material is in the range of 7 µm to 12 µm, the battery cell exhibits a good capacity retention rate.

As shown in Examples 20 and 21, the temperature for reactions between the ammonium salt and the positive electrode base material is in a range of 400°C to 600°C and the reaction time is in the range of 4 h to 6 h, so that preparation of the first coating layer and the second coating layer is facilitated.

It should be noted that this application is not limited to the above embodiments. The above embodiments are only examples, and embodiments that have substantially the same constitution as the technical idea and exert the same effects within the technical scope of this application are included in the technical scope of this application. In addition, without departing from the gist of this application, various modifications that can be conceived by those skilled in the art to the embodiments, and other modes constructed by combining some of the constituent elements of the embodiments, are also included in the scope of this application.

## Claims

1. A positive electrode active material, **characterized by** comprising: a positive electrode base material, and a first coating layer and a second coating layer sequentially coating a surface of primary particles of the positive electrode base material; wherein a concentration of lithium element in the first coating layer is lower than a concentration of lithium element in the positive electrode base material, and the second coating layer comprises an ion conductor material.

2. The positive electrode active material according to claim 1, **characterized in that** a chemical formula of the positive electrode base material is Li₁₊ₐ[NiₓCo_{y}Mn_{z}M_{b}]O₂, wherein M comprises at least one of Zr, Al, Ti, Sb, Nb, Te, Mg, Al, Ca, V, Ta, or Sr, 0.6 ≤ x < 1, 0 ≤ y ≤ 0.4, 0 ≤ z ≤ 0.4, 0 ≤ a ≤ 0.2, 0 ≤ b ≤ 0.1, and x + y + z + b = 1; optionally, 0.8 ≤ x < 1; and optionally, M comprises at least one of Ti, Nb, Te, V, or Ta.

3. The positive electrode active material according to claim 1 or 2, **characterized in that** the ion conductor material comprises a compound formed by Li element and at least one of W, Mo, or P element; and optionally, the ion conductor material comprises at least one of Li₂WO₄, Li₂MoO₄, or Li₃PO₄.

4. The positive electrode active material according to any one of claims 1 to 3, **characterized in that** a material of the first coating layer comprises a transition metal oxide, wherein a transition metal in the transition metal oxide is the same as a transition metal in the positive electrode base material.

5. The positive electrode active material according to any one of claims 1 to 4, **characterized in that** a thickness d1 of the first coating layer satisfies: 1 nm ≤ d1 ≤ 5 nm; and optionally, 1 nm ≤ d1 ≤ 2 nm.

6. The positive electrode active material according to any one of claims 1 to 5, **characterized in that** a thickness d2 of the second coating layer satisfies: d2 ≤ 20 nm; and optionally, 4 nm < d2 ≤ 10 nm.

7. The positive electrode active material according to any one of claims 1 to 6, **characterized in that** a ratio B of a mass of the second coating layer to a mass of the positive electrode base material satisfies: 1000 ppm ≤ B ≤ 3000 ppm; and optionally, 1000 ppm ≤ B ≤ 2000 ppm.

8. The positive electrode active material according to any one of claims 1 to 7, **characterized in that** a particle size distribution by volume of the positive electrode active material satisfies: (Dᵥ901 - Dᵥ101)/Dᵥ501 ≥ 1.2; and optionally, (Dᵥ901 - Dᵥ101)/Dᵥ501 ≥ 1.3.

9. The positive electrode active material according to any one of claims 1 to 8, **characterized in that** a particle size distribution by volume Dᵥ501 of the positive electrode active material satisfies: 7 µm ≤ Dᵥ501 ≤ 12 µm ; and optionally, 8 µm ≤ Dᵥ501 ≤ 10 µm.

10. The positive electrode active material according to any one of claims 1 to 9, **characterized in that** the first coating layer comprises a material having a spinel structure.

11. A preparation method for the positive electrode active material according to any one of claims 1 to 10, **characterized by** comprising:
preparing a positive electrode base material; and
preparing a first coating layer and a second coating layer on a surface of primary particles of the positive electrode base material to obtain the positive electrode active material.

12. The method according to claim 11, **characterized in that** the preparing a first coating layer and a second coating layer on a surface of primary particles of the positive electrode base material to obtain the positive electrode active material comprises:
mixing and sintering the positive electrode base material and an ammonium salt in an inert atmosphere to obtain the positive electrode active material.

13. The method according to claim 12, **characterized in that** the mixing and sintering the positive electrode base material and an ammonium salt in an inert atmosphere to obtain the positive electrode active material comprises:
mixing the positive electrode base material and the ammonium salt in a high-energy ball mill; and
sintering the mixed positive electrode base material and ammonium salt in the inert atmosphere to obtain the positive electrode active material.

14. The method according to claim 13, **characterized in that** a rotational speed V of the high-energy ball mill satisfies: 500 rpm ≤ V ≤ 1400 rpm; and optionally, 800 rpm ≤ V ≤ 1200 rpm.

15. The method according to claim 13 or 14, **characterized in that** a ball milling time t1 satisfies: 0.5 h < tl ≤ 3 h; and optionally, 1 h ≤ t1 ≤ 2 h.

16. The method according to any one of claims 13 to 15, **characterized in that** a sintering temperature T1 satisfies: 400°C ≤ T1 ≤ 600°C; and optionally, 400°C ≤ T1 ≤ 500°C.

17. The method according to any one of claims 13 to 16, **characterized in that** a sintering time t2 satisfies: 4 h ≤ t2 ≤ 8 h; optionally, 5 h ≤ t2 ≤ 6 h.

18. The method according to any one of claims 13 to 17, **characterized in that** the ammonium salt comprises at least one of W, Mo, or P element; and optionally, the ammonium salt comprises at least one of ammonium molybdate, ammonium paramolybdate, ammonium metatungstate, ammonium phosphate, ammonium hydrogen phosphate, or ammonium dihydrogen phosphate.

19. The method according to any one of claims 11 to 18, **characterized in that** the preparing a positive electrode base material comprises:
preparing a precursor of the positive electrode base material; and
mixing and sintering the precursor, a lithium salt, and a compound containing M element to prepare the positive electrode base material, wherein M element comprises at least one of Zr, Al, Ti, Sb, Nb, Te, Mg, Al, Ca, V, Ta, or Sr.

20. The method according to claim 19, **characterized in that** a molar ratio C of the lithium salt to a metal element in the precursor satisfies: 0.95 ≤ C ≤ 1.15; and/or a sintering temperature T2 satisfies: 650°C < T2 ≤ 950°C; and/or a sintering time t3 satisfies: 10 h ≤ t3 ≤ 20 h.

21. The method according to claim 19 or 20, **characterized in that** based on a total mass of the precursor, the lithium salt, the compound containing M element, a mass content D of the compound containing M element satisfies: 200 ppm ≤ D ≤ 5000 ppm.

22. The method according to any one of claims 19 to 21, **characterized in that** a particle size distribution by volume Dᵥ502 of the precursor satisfies: 7 µm < Dᵥ502 ≤ 12 µm; and optionally, 8 µm < Dᵥ502 ≤ 10 µm.

23. A positive electrode plate, **characterized by** comprising the positive electrode active material according to any one of claims 1 to 10, and/or the positive electrode active material prepared by using the method according to any one of claims 11 to 22.

24. A battery cell, **characterized by** comprising the positive electrode plate according to claim 23.

25. A battery, **characterized by** comprising the battery cell according to claim 24.

26. An electric apparatus, **characterized by** comprising the battery according to claim 25.
